Europäisches Patentamt

European Patent Office

Office européen des brevets

(11) Publication number: **0 203 258**
A2

# (12) EUROPEAN PATENT APPLICATION

(21) Application number: **86101390.2**

(51) Int. Cl.⁴: **H 02 K 15/06**

(22) Date of filing: **03.02.86**

(30) Priority: **29.05.85 US 738867**

(43) Date of publication of application: **03.12.86 Bulletin 86/49**

(84) Designated Contracting States: **DE FR GB IT**

(71) Applicant: **Industra Products Inc., 4010 Piper Drive, Fort Wayne Indiana 46801 (US)**

(72) Inventor: **Moser, Keith W., 15015 Feighner Road, Roanoke Indiana 46783 (US)**

(74) Representative: **Jochem, Bernd, Dipl.-Wirtsch.-Ing. et al, Patentanwälte Beyer & Jochem Postfach 17 01 45, D-6000 Frankfurt/Main (DE)**

(54) **Stator pallet.**

(57)  A pallet (10) for supporting a stator (30) having a generally flat surface (13) including an aperture therein for receiving a stator core. A supporting ring (16) is secured to the bottom surface (15) of the pallet (10) for supporting the stator core. A plurality of apertures (28) are spaced radially outwardly from the center of the bore (12) for receiving stator coil leads (34) during the assembly of stator coils (32) into the slots of the stator core. Each retaining aperture (28) receives one or more predetermined stator coil leads (34) for identifying and locating the leads.

ACTORUM AG

1

## STATOR PALLET

This invention relates to a pallet and more specifically to a pallet for supporting a stator for a dynamo-electric machine. In the manufacture and assembly of stators for electric motors stators are sometimes placed in pallets during the insertion of stator coils into the core slots of the stators. The pallets are utilized as a means to transport and handle the stator cores through the various assembly processes. Such pallets are relatively simple structures comprising a rectangular or square metal plate including an aperture therein for receiving a stator core. A shoulder portion of the pallet normally supports the stator core in the stator core pallet aperture.

The normal process for providing and inserting stator coils into a stator core is to wind the stator coils on automated winding equipment and thereafter to strip the coils from the winding form onto coil injection equipment. A stator core is placed on a stator pallet and the pallet including the stator core is located adjacent the injection equipment for insertion of the coils into the slots of the stator core. The prewound coils have beginning and ending wire ends or leads which must be located and identified after insertion of the coils into the stator core in order to make the appropriate circuit connections. This is a cumbersome and time consuming operation which has been performed manually in prior art coil injection processes. It is therefore desired to provide a stator core pallet which includes means for retaining and identifying coil wire ends or leads during and after assembly of the coils into a stator core whereby the stator coil leads are both located and identified throughout the assembly process.

An additional problem which has been encountered with prior art coil assembly equipment is that the loose coil leads, during insertion and during the various other stator assembling processes of the coils into the stator core, tend to get tangled in the end turns of the coils thereby making it necessary to extract the coil leads from the end turns of the coils prior to making the necessary circuit connections. Some motors contain several sets of coils which are inserted sequentially. Loose coil leads tend to get captured and tangled during subsequent coil insertions, which is indesirable. Additionally, the leads tend to become damaged or broken off during the various other stator assembly processes of the stator coils thereby resulting in defective motors. It is therefore desired to provide a stator core pallet wherein the coil leads are retained in retaining means during assembly of the coils into a stator core whereby the loose leads are not subject to being caught and tangled in the coils during coil insertion or other processes and being damaged thereby.

A yet further disadvantage of prior art stator pallets has been that the entire stator assembly process must be completed before the stator can be tested in the prior art stator assembly equipment the coil leads are not available without manual intervention for connection to testing equipment. It is therefore desired to provide a stator core pallet including retaining means for retaining stator coil leads

3

whereby the stator coils can be tested at various points in the stator assembly process without manual intervention.

The present invention overcomes the disadvantages of the above described prior art stator core pallets by providing an improved stator core pallet therefor.

. The stator core pallet of the present invention, includes retaining means for locating, identifying and retaining loose stator coil leads both during and after insertion of stator coils into a stator core.

More particularly the present invention, in one form thereof, provides a generally flat rectangular stator core pallet including an aperture in which a stator is received. A support ring is secured to the pallet for supporting the stator core. Spaced radially outwardly from the center of the pallet stator aperture are a plurality of apertures within which the loose coil leads of the stator coils are received and retained during assembly of the coils into the stator core. Each aperture receives one or more leads. By lacing stator coil leads through predetermined apertures the coil leads are both retained and identified during the entire stator coil assembly process.

One advantage of the pallet according to the present invention is that loose coil leads are prevented from being caught in the coil end turns during assembly of the coils into a stator core. -

Another advantage of the stator core pallet according to the present invention is that it permits good control over the loose coil leads during assembly of the stator coils into a stator core by retaining the leads and securing them for further assembly operations.

Yet another advantage of the pallet according to the present invention is that the coil leads are identified and located during the entire coil assembly process thereby eliminating the time consuming operation of manually locating the coil leads after assembly of the coils into a stator core.

A further advantage of the present invention is that the possibility of damage to loose stator coil leads during assembly of stator coils into stator cores is eliminated by retaining the coil leads to prevent them from getting caught in the stator coils and being damaged thereby.

A still further advantage of the stator core pallet according to the present invention is that it permits automation of the coil lead circuit connecting process after assembly of the coils into a stator core.

A yet further advantage of the present invention is that it permits testing of stator coils during the entire coil inserting and assembling process whereby defects can be corrected early in the assembly process and whereby the possibility of defective motors will be reduced.

One additional advantage of the present invention is that it permits the use of a universal pallet for assembly of various types of motor stators including stators having coils manufactured from different types of wire, wound in different directions or having various numbers of poles and stack heights.

The invention, in one form thereof, comprises a pallet for supporting a stator core during assembly of stator coils in the slots of the core, and including a support means for supporting the stator core. Retaining means are operatively associated with the support means for receiving stator coil leads whereby the leads are identifiably located and retained in the retaining means.

The invention, in one form thereof, further provides a pallet for supporting a stator core during assembly of stator coils therein, said stator core including axial slots. The pallet comprises support means including upper and lower generally planar surfaces, the upper surface including an aperture therein for receiving a stator core. A plurality of locating apertures are provided in the support means with the locating apertures arranged so that their axes are parallel with and radially outwardly of the axis of the stator receiving aperture. The locating apertures will thereby receive coil leads for retention and identification thereof during assembly of the stator coils into the slots of the stator core.

The invention, in one form thereof, still further provides a pallet for supporting a stator core, the stator core including slots for receiving stator coils and the pallet comprising a support means including upper and lower parallel planar surfaces with the upper surface including an aperture for receiving a stator core. A ring means is secured to the lower surface for supporting the core and a plurality of coil lead retaining apertures are provided in the support means with their axes arranged

6

in parallel with and radially outwardly of the axis of the core receiving aperture. The retaining apertures are adapted to receive coil wire leads whereby the leads are retained and identified by their location in predetermined apertures.

It is an object of the present invention to provide a stator pallet including means for retaining loose coil leads thereby preventing the loose leads from getting caught in the stator coils during assembly thereof into a stator core.

It is another object of the present invention to retain and identify coil leads during and after assembly of stator coils into stator cores.

Yet another object of the present invention is to provide a stator pallet including coil lead retaining means thereby preventing damage to loose coil leads and tangling of coil leads in adjacent processing mechanisms.

A further object of the present invention is to provide a stator pallet which permits automation of the coil lead trimming and connecting operations by locating and identifying the leads in retaining means during the entire coil assembly process.

A still further object of the present invention is to provide a stator pallet which permits testing of the partially assembled stator cores throughout the assembly process.

A yet further object of the present invention is to provide a stator pallet for universal application to stators having different parameters.

The above mentioned and other features and objects of this invention, and the manner of obtaining them, will become more apparent and the invention itself will be better understood by reference to the following description of an embodiment of the invention taken in conjunction with the accompanying drawings, wherein:

Fig. 1 is a plan view of a stator pallet according to the present invention;

Fig. 2 is a sectional view of the stator pallet and a stator assembly taken in the direction of the arrows 2-2 of fig. 1.

Corresponding reference characters indicate corresponding parts throughout the several views of the drawings.

The exemplifications set out herein illustrate a preferred embodiment of the invention, in one form thereof, and such exemplifications are not to be construed as limiting the scope of the disclosure or the scope of the invention in any manner.

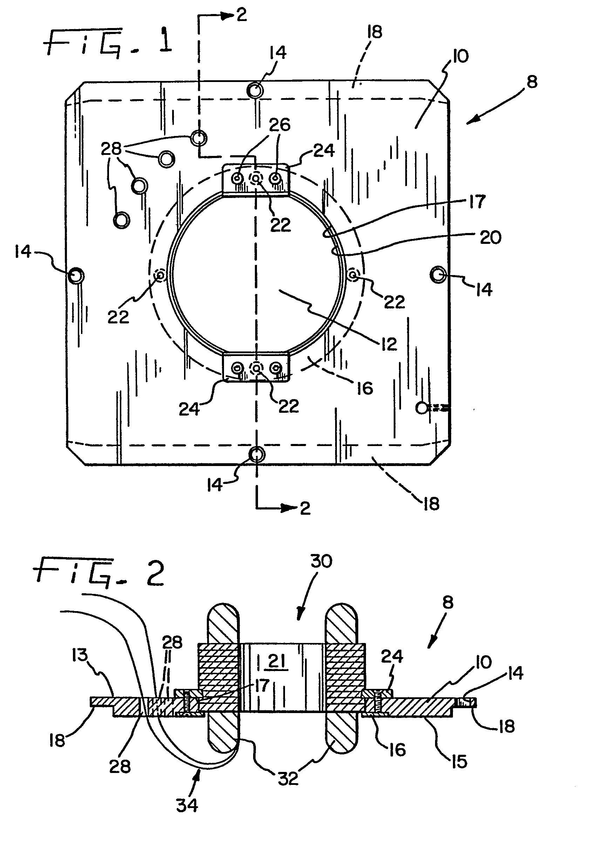

Referring to figs. 1 and 2, the stator pallet assembly 8 comprises a generally planar rectangular or square pallet structure (10) including a bore 12 for receiving a stator core. The pallet also includes locating holes 14 for locating pallet assembly 8 in automated injection equipment. A pair of shoulders 18 are provided where at pallet assembly 8 is supported in such coil injection equipment. A supporting ring 16 is secured to the lower surface of the pallet by means of fasteners 22, four of which are shown. Ring 16 includes an opening of smaller diameter than bore 12 of pallet 10 whereby a shoulder 20 is formed for supporting a stator core. As best seen in fig. 2 stator core 21 is received in bore 12 and is prevented

8

from lateral movement by cylindrical wall 17 of bore 12. A pair of retainers 24 are secured to pallet 10 by fasteners 26 for retaining stator core 21 in pallet 10 during insertion of the coils into the core. Retainers 24 prevent the core 21 from rotating during the coil insertion process and engage flats on the outer surface of the stator core.

A plurality of apertures 28 is provided in pallet 10 for retaining loose coil leads during assembly of coils into stator core 21. The retaining apertures are located radially outwardly of the center of the bore 12. The apertures are shown located in one quadrant in the illustrated embodiment. It should be understood that other locations for the apertures could be chosen. However it is important that the retaining apertures are aligned with the slots of the stator core which contain the coil leads. By locating the retained coil leads radially outwardly from the slots the leads will run between the cuff supports during the various stator assembling processes and will be protected from damage caused due to crossing over the cuff supports.

As best seen in fig. 2 loose coil leads 34 of stator coils 32 are laced through predetermined apertures 28 by lead pullers whereby the leads will be retained in apertures 28. The leads are located in predetermined ones of apertures 28 so that they are identified. The leads are loosely retained in apertures 28 whereby they can be easily removed for further treatment such as having the insulation stripped therefrom, trimming and connecting operations.

9

Apertures 28 are located radially outwardly from the center of bore 12 whereby the apertures, and the leads located therein, can be identified by the radial distance outwardly from the center of bore 12 and by their angular orientation as measured by the angular orientation of a radius drawn from an aperture 28 to the center of bore 12.

It should be understood that in most cases only one coil lead is received in each aperture as best illustrated in fig. 2 since each aperture 28 identifies and locates one individual lead location. However it should be understood that apertures 28 may retain more than one lead for certain applications. Furthermore, while in the illustrated embodiment the leads 34 are laced upwardly through apertures 28 it is possible to lace leads 34 downwardly from the top coil end turns through apertures 28.

While in the disclosed embodiment the lead retaining means are shown as apertures 28, it should be understood that various other types of retaining means could also be used. Thus it is possible to provide clips for retaining the leads on upper and lower surfaces 13 and 15 respectively of pallet 10. It should also be appreciated that the pallet according to the present construction is universal in nature since it may be used to retain and locate coil leads for stators having a greater or lesser number of leads, and wherein the wire is of varying thickness. However, if stator cores of greater or lesser diameters are used another pallet having a larger or smaller bore 12 should be provided.

10

While this invention has been described as having a preferred design, it will be understood that it is capable of further modification. This application is therefore intended to cover any variations, uses, or adaptations of the invention following the general principles thereof and including such departures from the present disclosure as come within known or customary practice in the art to which this invention pertains and fall within the limits of the appended claims.

11

## CLAIMS

1. A pallet for supporting a stator core during assembly of stator coils in the slots of said core, the pallet comprising:

supporting means (10) for supporting a stator core (30); characterized by retaining means (28) operatively associated with said supporting means for receiving stator coil leads (34) whereby said leads are identifiably located and retained in said retaining means (10).

2. The pallet according to Claim 1 wherein said retaining means comprises an aperture (28) in said supporting means (10).

3. The pallet according to Claim 1 wherein said supporting means (10) includes a generally planar surface (13), said surface including means (12) for receiving said core (30) to prevent lateral movement thereof.

4. The pallet according to Claim 3 wherein said receiving means comprises an aperture (12) in said surface for receiving said core.

5. The pallet according to Claim 4 wherein said support means includes a shoulder means (16) secured to said support means and aligned with said core receiving aperture (12) for supporting said stator core (30).

6. The pallet according to Claim 5 wherein said shoulder means comprises a ring member (16) for supporting said core, said ring member secured to said carrying means.

7. The pallet according to Claim 1 wherein said retaining means comprises a plurality of apertures (28) in said carrying means for receiving beginning and ending coil leads (34).

8. The pallet according to Claim 7 wherein said plurality of apertures (28) are located radially outwardly of the axis of said core receiving aperture (12) and aligned with predetermined coil slots of said core (30) being supported on said pallet (10), said slots having coil leads therein.

FIG. 1

FIG. 2

0203258